# EUROPÄISCHE PATENTSCHRIFT

(11) **EP 2 910 835 B1**
(45) Veröffentlichungstag und Bekanntmachung des Hinweises auf die Patenterteilung: **08.08.2018**
(21) Anmeldenummer: 14199759.3
(22) Anmeldetag: 22.12.2014
(51) Int. Cl.: F16L 53/00, F01N 3/20, F24H 1/10

(54) **Beheizbare Fluidleitung**
Heatable fluid line
Conduite de fluide pouvant être chauffée

(30) Priorität: 24.02.2014 DE 102014102357
(43) Veröffentlichungstag der Anmeldung: 26.08.2015
(73) Patentinhaber: NORMA Germany GmbH, 63477 Maintal (DE)
(72) Erfinder: Birman, Ervin, 24000 Subotica (RS); Mann, Stephan, 63599 Biebergemünd (DE); Eckardt, Carsten, 63486 Bruchköbel (DE)
(74) Vertreter: Patentanwälte Olbricht Buchhold Keulertz

(56) Entgegenhaltungen:
- EP-A1- 2 006 593
- EP-A2- 1 070 642
- DE-A1-102011 102 151
- US-A- 3 667 783

## Beschreibung

Die Erfindung betrifft eine beheizbare Fluidleitung mit einem Rohr, einem Verbinder, der ein Gehäuse aufweist, das an einem Ende des Rohres angeordnet ist, und einem Heizstab, der im Inneren des Rohres angeordnet ist und durch einen eine Längsachse aufweisen- den Eintrittskanal in das Gehäuse eintritt und durch einen in einem Stutzen angeordneten Austrittskanal aus dem Gehäuse austritt, wobei im Stutzen eine Dichtung angeordnet ist, die den Heizstab umgibt und durch einen Stopfen im Stutzen gehalten ist.

Eine derartige beheizbare Fluidleitung ist beispielsweise aus DE 10 2011 102 151 A1 bekannt.

Die Erfindung wird im Folgenden anhand einer Fluidleitung beschrieben, die in einem Kraftfahrzeug dazu verwendet wird, Harnstoff oder Urea von einem Tank zu einer Verbrauchsstelle zu leiten. Harnstoff wird bei Dieselmotoren verwendet, um Stickoxyde zu reduzieren.

Bei niedrigen Außentemperaturen unterhalb von -11°C besteht die Gefahr, dass der Harnstoff in der Fluidleitung einfriert und somit eine Förderung des Harnstoffs durch die Leitung nicht mehr möglich ist. Bei anderen Flüssigkeiten können die Gefrierpunkte andere Werte haben. Bei einem Einfrieren der Flüssigkeit ist auf jeden Fall ein Transport der Flüssigkeit durch die Fluidleitung nicht mehr möglich.

Man hat daher in der oben genannten DE 10 2011 102 151 A1 vorgeschlagen, einen Heizstab zur Beheizung der Fluidleitung und des Verbinders zu verwenden. Dieser Heizstab ist im Inneren des Rohres angeordnet, so dass die gesamte Heizenergie auf das Fluid im Inneren des Rohres übertragen werden kann und somit die Energieverluste relativ gering sind. Allerdings muss der Heizstab mit elektrischer Energie versorgt werden. Zu diesem Zweck wird der Heizstab aus dem Verbinder herausgeführt.

Die Öffnung, durch die der Heizstab aus dem Verbinder herausgeführt wird, muss abgedichtet werden, um ein Austreten des Fluides aus der Leitung nach außen zu verhindern. Hierzu ist die Dichtung vorgesehen, die im Grunde einfach als O-Ring ausgebildet sein kann. Um diese Dichtung auch bei größeren Drücken im Inneren des Rohres in Position zu halten, ist der Stopfen vorgesehen. Der Stopfen wird in den Stutzen eingedrückt. Um eine verbesserte Haltekraft zu erreichen, wird der Stopfen mit dem Stutzen verrastet. Hierzu ist allerdings eine relativ große Einpresskraft erforderlich.

EP 2006 593 A1 zeigt ein Leitungssystem zum Erhitzen und Warmhalten von Fluiden. Das über einen Verbinder in die Leitung eingebrachte Heizelement wird mit einem Stopfen im Stutzen befestigt. Dieser Stopfen weist radial nach außen stehende Vorsprünge auf, die in Aussparungen im Stutzen einrasten.

EP 1070 642 A2 beschreibt eine Heizvorrichtung für Scheibenwaschanlagen, die einen ähnlichen Aufbau aufweist. Auch in EP 1070 642 A2 weist ein Stopfen, durch den ein Heizleiter geführt wird, Vorsprüngen auf, wodurch der Stopfen in den Stutzen einrastet.
Der Erfindung liegt die Aufgabe zu Grunde, eine zuverlässige Montage auf einfache Weise zu bewirken.

Diese Aufgabe wird bei einer beheizbaren Fluidleitung der eingangsgenannten Art dadurch gelöst, dass der Stopfen zwei Teile, die durch einen eine Gelenkachse aufweisenden Gelenkabschnitt miteinander verbunden sind, und einen Durchgangskanal aufweist, durch den der Heizstab geführt ist, wobei im Durchgangskanal radial nach innen weisende Vorsprünge angeordnet sind.

Durch die Form des Stopfens wird die Montage vereinfacht. Die beiden Teile des Stopfens haben jedenfalls außerhalb des Gelenkabschnitts einen gewissen Abstand zueinander und können dementsprechend aufeinander zu bewegt werden. Dadurch wird der Außenumfang etwas verkleinert, so dass der Stopfen einfacher in den Stutzen eingesetzt werden kann.

Hierbei ist bevorzugt, dass der Gelenkabschnitt durch eine Brücke gebildet ist, die einstückig mit den Teilen des Stopfens ausgebildet ist. Dies vereinfacht die Herstellung. Der Stopfen kann insgesamt einstückig ausgebildet sein, beispielsweise durch Spritzgießen. Die Brücke hat eine Erstreckung, die wesentlich geringer ist als die Höhe des Stopfens. Beispielsweise hat die Brücke eine Erstreckung in Höhenrichtung, die maximal einem Drittel oder sogar nur einem Viertel der Höhe des Stopfens entspricht. Eine derartige Brücke erlaubt dann das Neigen der Teile des Stopfens relativ zueinander.

Vorzugsweise ist der Stopfen mit dem Heizstab verschweißt. Wenn der Stopfen in den Stutzen eingesetzt worden ist, kann er mit dem Heizstab verschweißt werden, vorzugsweise durch eine Ultraschall-Schweißung. Durch das Verschweißen verhindert man, dass sich die Teile des Stopfens erneut aufeinander zu bewegen können, so dass der Stopfen nach dem Verschweißen unverlierbar im Stutzen gehalten ist.

Vorzugsweise weist der Stutzen zwei gegenüberliegende Schweißansatzzonen auf und die Gelenkachse verläuft parallel zu einer Verbindung zwischen den Schweißansatzzonen. Eine Schweißansatzzone ist ein Bereich an der Außenseite des Stutzens, an der bei einer Ultraschallschweißung eine Sonode angesetzt werden kann. Die beiden Schweißansatzzonen definieren damit eine Schweißrichtung, d. h. die Richtung, in der die Schweißenergie in den Stopfen eingetragen wird. Wenn die Gelenkachse parallel zu dieser Richtung verläuft, dann erfolgt beim Schweißen keine Schwingung um die Gelenkachse. Die gesamte Schweißenergie geht nur durch das Material des Stopfens. Der Heizstab selbst wird nicht in den "Schweißstrahl" eingebunden, so dass die Gefahr einer Beschädigung der Heizdrähte im Heizstab praktisch ausgeschlossen ist.

Vorzugsweise sind die Schweißansatzzonen beidseits der Längsachse angeordnet. Hier steht ausreichend Raum zur Verfügung, um beispielsweise Sonoden bei einer Ultraschall-Schweißung anzusetzen.

Vorzugsweise weist der Stopfen Zentriervorsprünge auf und die Gelenkachse verläuft zwischen den Zentriervorsprüngen. Die Zentriervorsprünge dienen dazu, den Stopfen in einer vorbestimmten Ausrichtung in den Stutzen einzusetzen. Durch die Zentriervorsprünge kann man erreichen, dass die Gelenkachse genau die Richtung hat, die für die Schweißverbindung gewünscht ist. Der Stopfen weist einen Durchgangskanal auf, durch den der Heizstab geführt ist, wobei im Durchgangskanal radial nach innen weisende Vorsprünge angeordnet sind. Wenn der Stopfen in den Stutzen eingesetzt wird, dann kann man die Teile des Stopfens etwas aufeinander zu bewegen, obwohl der Heizstab bereits durch den Durchgangskanal geführt ist. Bei dem Zusammendrücken können die Vorsprünge etwas nachgeben und / oder sich in den Heizstab eindrücken. An den Vorsprüngen kann dann aber eine Verschweißung des Stopfens mit dem Heizstab erfolgen.

Hierbei ist bevorzugt, dass die Vorsprünge an ihrer radialen Innenseite eine kleinere Erstreckung in Umfangsrichtung aufweisen als an ihrer radialen Außenseite. Mit anderen Worten verlaufen die Vorsprünge radial nach innen spitz zu. Dadurch entsteht eine relativ kleine Kontaktfläche zwischen den Vorsprüngen und der Außenseite des Heizstabes. Da sich die Schweißenergie dann an diesen kleinen Vorsprüngen konzentriert, kann man mit relativ geringer Schweißenergie ein Verschweißen des Stopfens mit dem Heizstab erreichen.

Hierbei ist bevorzugt, dass in mindestens einem Teil mindestens zwei Vorsprünge vorgesehen sind, die in Umfangsrichtung mit einem Abstand von mindestens 120° angeordnet sind. Bei mindestens einem Teil, vorzugsweise aber bei den beiden Teilen des Stopfens, sind dann Vorsprünge praktisch diametral gegenüberliegend angeordnet. Die Vorsprünge liegen dann in Schweißrichtung hintereinander, so dass man mit relativ geringer Schweißenergie ein hervorragendes Ergebnis erhalten kann.

Bevorzugterweise ist zwischen den Teilen ein Freiraum vorgesehen, der zumindest teilweise im Stutzen angeordnet ist. Dieser Freiraum hat zwei Funktionen. Bei der Montage des Stopfens im Stutzen erlaubt er, dass die Teile des Stopfens aufeinander zu bewegt werden, um das Einsetzen zu erleichtern. Wenn der Stopfen in den Stutzen eingesetzt ist und der Schweißvorgang beginnt, dann ist der Freiraum vorgesehen, um eine Tasche oder einen Aufnahmeraum zu bilden, in denen aufgeschmolzenes Material aufgenommen werden kann.

Die Erfindung wird im Folgenden anhand eines bevorzugten Ausführungsbeispiels in Verbindung mit der Zeichnung beschrieben. Hierin zeigen:
- Fig. 1: ein Ausführungsbeispiel einer Fluidleitung mit einem Verbinder,
- Fig. 2: einen Schnitt 11-11 nach Fig. 1
- Fig. 3: eine Draufsicht auf einen Stutzen mit Stopfen und Heizstab und
- Fig. 4: eine perspektivische Darstellung eines Stopfens.

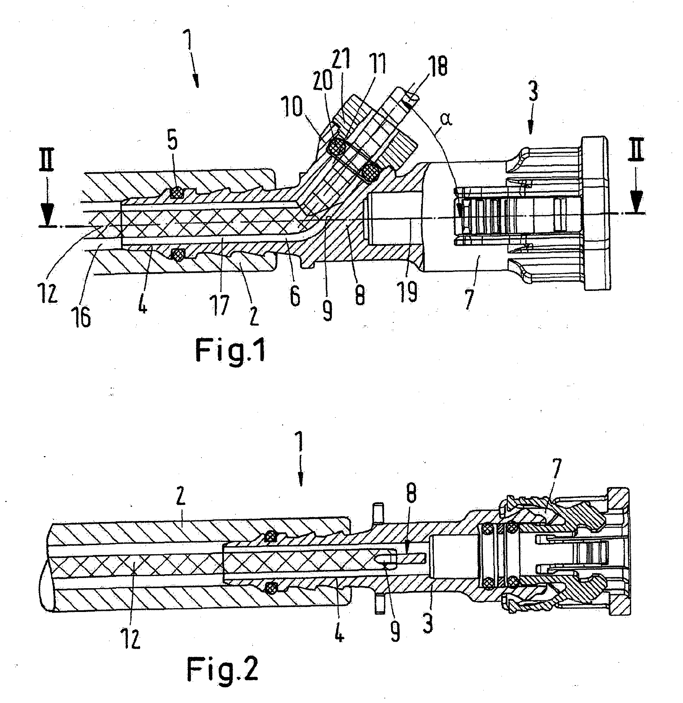

Fig. 1 zeigt eine Fluidleitung 1 mit einem Rohr 2 und einem Verbinder 3. Der Verbinder 3 weist einen Anschlussstutzen 4 auf, auf den das Rohr 2 aufgeschoben ist. Der Anschlussstutzen 4 weist eine "Tannenbaum"-geometrie auf. Das Rohr 2 kann mit nicht näher dargestellten Mitteln auf dem Anschlussstutzen 4 befestigt werden. Beispielsweise kann das Rohr im Bereich des Anschlussstutzens 4 mit einer Vergussmasse eingegossen werden, so dass es sich radial nicht mehr dehnen kann. Zusätzlich ist ein Dichtring 5 zwischen dem Rohr 2 und dem Anschlussstutzen 4 vorgesehen.

Das Rohr 2 ist aus einem Kunststoff gebildet. Es ist flexibel. Es kann auch schlauchartig ausgebildet sein.

Der Verbinder 3 weist im vorliegenden Ausführungsbespiel einen gradlinig verlaufenden Eintrittskanal 6 auf, der den Anschlussstutzen 4 durchsetzt und bis zu einer Anschlussgeometrie 7 geführt ist, mit deren Hilfe der Verbinder 3 an einen Stutzen eines Tanks, einer Pumpe oder eines anderen Verbinders befestigt werden kann. Die genaue Ausbildung der Anschlussgeometrie 7 spielt für den vorliegenden Fall keine Rolle. Sie ist aber so ausgebildet, dass sie eine mechanisch stabile und fluiddichte Verbindung ermöglichen kann.

Im Eintrittskanal 6 ist ein Rampenelement 8 angeordnet, dass eine Führungsfläche 9 aufweist. Der Verbinder 3 weist einen Stutzen 10 auf, der eine Öffnung 11 bildet.

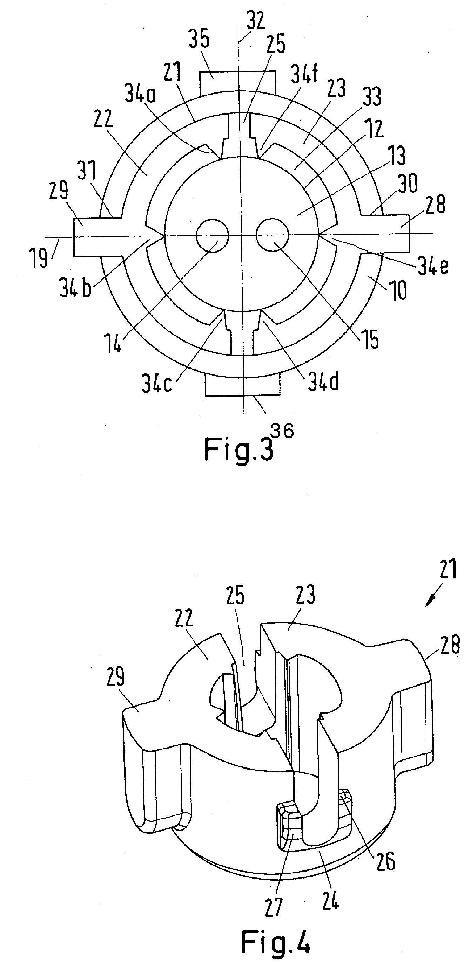

Im Rohr 2 ist ein Heizmittel in Form eines Heizstabs 12 angeordnet. Der Heizstab 12 ist aus einem Kunststoff 13 gebildet, in dem zwei Heizleiter 14, 15 (Fig. 3) angeordnet sind. Der Heizstab 12 ist biegbar. Die Heizleiter 14, 15 sind mechanisch geschützt im Inneren des Heizstabs 12 aufgenommen.

Zwischen dem Heizstab 12 und dem Rohr 2 ist ein Innenraum 16 gebildet, durch den eine Flüssigkeit strömen kann. Auch zwischen dem Anschlussstutzen 4 und dem Heizstab 12 ist ein Innenraum 17 gebildet.

Wenn der Heizstab 12 in den Anschlussstutzen 4 eingeschoben wird, dann gelangt seine Spitze 18 auf die Führungsfläche 9 und wird von der Führungsfläche 9 des Rampenelements 8 abgelenkt und zwar in den Stutzen 10 zur Öffnung 11 hin. Wenn der Heizstab 12 weitergeschoben wird, dann tritt er durch die Öffnung 11 aus dem Stutzen 10 aus. Der Stutzen 10 steht unter einem Winkel α zur Längsachse 19 des Eintrittskanals 6. Dieser Winkel liegt vorzugsweise im Bereich von 20° bis 80°.

In der Öffnung 11 ist zwischen der Innenwand des Stutzens 10 und dem Heizleiter 12 eine Ringdichtung 20 angeordnet. Die Ringdichtung 20 liegt radial nach außen dichtend an der Innenseite des Stützens 10 an und radial nach innen dichtend am Heizstab 12. Die Ringdichtung 20 wird auf den Heizstab 12 aufgesetzt, wenn er aus der Öffnung 11 ausgetreten ist und dann in die Öffnung 11 eingesetzt. Dabei kann die Ringdichtung 20 nach radial innen und nach radial außen geringfügig komprimiert werden.

Im Inneren der Fluidleitung 1 kann ein erhöhter Druck von beispielsweise 6 bar auftreten. Bei einem derartigen Druck besteht die Gefahr, dass die Ringdichtung 20 aus der Öffnung 11 herausgedrückt wird. Um dies zu verhindern, ist ein Stopfen 21 in dem Stutzen 10 eingesetzt, der die Ringdichtung 20, die als O-Ring ausgebildet sein kann, im Verbinder 3 festhält. Der Stopfen 21 ist in Fig. 3 in Draufsicht und in Fig. 4 vergrößert perspektivisch dargestellt.

Anstelle eines Verbinders mit einem gradlinig verlaufenden Durchgangskanal ist natürlich auch ein Verbinder mit einem um 90° umgelenkten Durchgangskanal möglich.

Der Stopfen 21 weist zwei Teile 22, 23 auf, die durch einen als Brücke 24 ausgebildeten Gelenkabschnitt miteinander verbunden sind (Fig. 3 und 4). Im Übrigen sind die beiden Teile 22, 23 durch einen Freiraum 25 voneinander getrennt. Die beiden Teile 22, 23 können also im Bereich des Freiraums 25 aufeinander zu gekippt werden. Dementsprechend weist der Gelenkabschnitt eine Gelenkachse 32 auf, die im vorliegenden Fall in einer Ebene liegt, die den Freiraum 25 etwa mittig teilt.

Beidseits des Freiraums 25 sind Rastvorsprünge 26, 27 angeordnet, mit denen der Stopfen 21 im Stutzen 10 rastend befestigt werden kann. Der Freiraum 25 kann die Rastvorsprünge 26, 27 ganz oder teilweise durchsetzen. Darüber hinaus weist der Stopfen 21 Zentriervorsprünge 28, 29 auf, die in Schlitze 30, 31 eintreten können, die im Stutzen 10 ausgebildet sind. Fig. 3 zeigt strichpunktiert die Gelenkachse 32, die zwischen den Zentriervorsprüngen 28, 29 verläuft.

Der Stopfen 21 weist einen Durchgangskanal 33 auf, durch den der Heizstab 12 geführt ist. Im Durchgangskanal 33 sind mehrere radial nach innen weisende Vorsprünge 34a - 34f angeordnet. Diese Vorsprünge 34a - 34f verlaufen radial nach innen spitz zu, d. h. sie weisen an ihrer radialen Innenseite eine kleinere Erstreckung in Umfangsrichtung auf als an ihrer radialen Außenseite. Jeder der beiden Teile 22, 23 weist zwei Vorsprünge 34a, 34c; 34d, 34f, auf, die in Umfangsrichtung jeweils mit einem Abstand von mindestens 120° angeordnet sind. Mit anderen Worten: Diese Vorsprünge 34a, 34c; 34d, 34f liegen einander diametral gegenüber.

Der Stutzen 10 weist auf seiner Außenseite Schweißansatzzonen 35, 36 auf, die im vorliegenden Ausführungsbeispiel ebene Anlageflächen für eine Sonode eines Ultraschall-Schweißgeräts haben. In Abhängigkeit von der Form der Sonoden können die Schweißansatzzonen 35, 36 aber auch andere Formen haben.

Es ist in Fig. 3 zu erkennen, dass die Gelenkachse 32 parallel zu einer Verbindung zwischen den Schweißansatzzonen 35, 36 verläuft. Die Schweißansatzzonen 35, 36 sind beidseits der Längsachse 19 angeordnet, bezogen auf die Fig. 1 also senkrecht zur Zeichenebene und bezogen auf die Darstellung der Fig. 2 oben und unten (in Fig. 2 aufgrund der Schnittansicht 50 nicht dargestellt). Damit läuft die Gelenkachse 32 parallel zur Schweißrichtung. In diesem Fall geht die gesamte Schweißenergie beim Ultraschall-Schweißen nur durch das Material des Stopfens 21. Eine Schwingung um die Gelenkachse 32 erfolgt nicht. Über die Vorsprünge 34a - 34f wird der Stopfen 21 ausreichend mit dem Heizstab 12 verschweißt. Da die Vorsprünge 34a - 34f radial nach innen scharfkantig oder spitz zulaufen, ergibt sich eine Konzentration der Schweißenergie an diesen Spitzen. Die Spitzen haben darüber hinaus den Vorteil, dass sie die Montage des Stopfens vereinfachen. Beim zusammendrücken der beiden Teile 22, 23 können die Spitzen der Vorsprünge 34a - 34f etwas nachgeben oder sich in den Heizstab 12 etwas eindrücken.

Der Heizstab 12 wird nicht in den "Schweißstrahl" eingebunden, so dass die Gefahr einer Beschädigung der Heizdrähte 14, 15 im Heizstab 12 nicht mehr gegeben ist.

Die Ausrichtung der Gelenkachse 32 parallel zum "Schweißstrahl" hat den zusätzlichen Vorteil, dass der Freiraum 25 nun eine Tasche oder einen Aufnahmeraum bildet, in dem aufgeschmolzenes Material aufgenommen werden kann.

## Patentansprüche

1. Beheizbare Fluidleitung (1) mit einem Rohr (2), einem Verbinder (3), der ein Gehäuse aufweist, das an einem Ende des Rohres (2) angeordnet ist, und einem Heizstab (12), der im Inneren des Rohres (2) angeordnet ist und durch einen eine Längsachse (19) aufweisenden Eintrittskanal (6) in das Gehäuse eintritt und durch eine in einem Stutzen (10) angeordnete Öffnung (11) aus dem Gehäuse austritt, wobei im Stutzen (10) eine Dichtung (20) angeordnet ist, die den Heizstab (12) umgibt und durch einen Stopfen (21) im Stutzen (10) gehalten ist, **dadurch gekennzeichnet, dass** der Stopfen (21) mindestens zwei Teile (22, 23), die durch einen eine Gelenkachse (32) aufweisenden Gelenkabschnitt miteinander verbunden sind, und einen Durchgangskanal (33) aufweist, durch den der Heizstab (12) geführt ist, wobei im Durchgangskanal (33) radial nach innen weisende Vorsprünge (34a - 34f) angeordnet sind.

2. Fluidleitung nach Anspruch 1, **dadurch gekennzeichnet, dass** der Gelenkabschnitt durch eine Brücke (24) gebildet ist, die einstückig mit den Teilen (22, 23) des Stopfens (21) verbunden ist.

3. Fluidleitung nach Anspruch 1 oder 2, **dadurch gekennzeichnet, dass** der Stopfen (21) mit dem Heizstab (12) verschweißt ist.

4. Fluidleitung nach Anspruch 3, **dadurch gekennzeichnet, dass** der Stutzen (10) zwei gegenüberliegende Schweißansatzzonen (35, 36) aufweist und die Gelenkachse (32) parallel zu einer Verbindung zwischen den Schweißansatzzonen (35, 36) verläuft.

5. Fluidleitung nach Anspruch 4, **dadurch gekennzeichnet, dass** die Schweißansatzzonen (35, 36) beidseits der Längsachse (19) angeordnet sind.

6. Fluidleitung nach einem der Ansprüche 1 bis 5, **dadurch gekennzeichnet, dass** der Stopfen (21) Zentriervorsprünge (28, 29) aufweist und die Gelenkachse (32) zwischen den Zentriervorsprüngen (28, 29) verläuft.

7. Fluidleitung nach Anspruch 1, **dadurch gekennzeichnet, dass** die Vorsprünge (34a - 34f) an ihrer radialen Innenseite eine kleinere Erstreckung in Umfangsrichtung aufweisen als an ihrer radialen Außenseite.

8. Fluidleitung nach Anspruch 1 oder 7, **dadurch gekennzeichnet, dass** in mindestens einem Teil (22, 23) mindestens zwei Vorsprünge (34a, 34c; 34d, 34f) vorgesehen sind, die in Umfangsrichtung mit einem Abstand von mindestens 120° angeordnet sind.

9. Fluidleitung nach einem der Ansprüche 1 bis 8, **dadurch gekennzeichnet, dass** zwischen den Teilen (22, 23) ein Freiraum (25) vorgesehen ist, der zumindest teilweise im Stutzen (10) angeordnet ist.

## Claims

1. Heated fluid line (1) having a tube (2), a connector (3), which has a housing, which is arranged at one end of the tube (2), and having a heating element (12), which is arranged in the interior of the tube (2) and enters into the housing through an inlet channel (6) comprising a longitudinal axis (19) and exits the housing through an opening (11) arranged in a spigot (10), wherein a seal (20) is arranged in the spigot (10) which surrounds the heating element (12) and is held by a plug (21) in the spigot (10), **characterised in that** the plug (21) has at least two parts (22, 23), which are connected to one another by a joint section comprising a joint axis (32), and a through channel (33), through which the heating element (12) is guided, wherein projections (34a-34f) pointing radially inwards are arranged in the through channel (33).

2. Fluid line according to claim 1, **characterised in that** the joint section is formed by a bridge (24), which is integrally connected to the parts (22, 23) of the plug (21).

3. Fluid line according to claim 1 or 2, **characterised in that** the plug (21) is welded to the heating element (12).

4. Fluid line according to claim 3, **characterised in that** the spigot (10) has two opposing weld attachment areas (35, 36) and the joint axis (32) runs parallel to a connection between the weld attachment areas (35, 36).

5. Fluid line according to claim 4, **characterised in that** the weld attachment areas (35, 36) are arranged on both sides of the longitudinal axis (19).

6. Fluid line according to any one of claims 1 to 5, **characterised in that** the plug (21) has centring projections (28, 29) and the joint axis (32) runs between the centring projections (28, 29).

7. Fluid line according to claim 1, **characterised in that** the projections (34a-34f) have a smaller extension in the circumferential direction on their radial inner side than on their radial outer side.

8. Fluid line according to claim 1 or 7, **characterised in that** at least two projections (34a, 34c; 34d, 34f) are provided in at least one part (22, 23) which are arranged in the circumferential direction at a distance of at least 120°.

9. Fluid line according to any one of claims 1 to 8, **characterised in that** a clearance (25) is provided between the parts (22, 23) which is at least partially arranged in the spigot (10).

## Revendications

1. Conduite de fluide (1) pouvant être chauffée, avec un tuyau (2), avec un raccord (3) qui comporte un corps qui est agencé à une extrémité du tuyau (2) et avec une barre chauffante (12) qui est agencée à l'intérieur du tuyau (2) et qui entre dans le corps par un canal d'entrée (6) présentant un axe longitudinal (19) et sort du corps par un orifice (11) agencé dans un piquage (10), dans laquelle un joint d'étanchéité (20) est agencé dans le piquage (10), lequel joint d'étanchéité entoure la barre chauffante (12) et est maintenu dans le piquage (10) par un bouchon (21), **caractérisée en ce que** le bouchon (21) comporte au moins deux parties (22, 23), qui sont assemblées par un tronçon articulé comportant un axe d'articulation (32), et un canal de passage (33), à travers lequel la barre chauffante (12) est guidée, des parties en saillie (34a à 34f) qui pointent radialement vers l'intérieur étant agencées dans le canal de passage (33).

2. Conduite de fluide selon la revendication 1, **caractérisée en ce que** le tronçon articulé est formé par un pont (24) qui est d'un seul tenant avec les parties (22, 23) du bouchon (21).

3. Conduite de fluide selon la revendication 1 ou 2, **caractérisée en ce que** le bouchon (21) est soudé à la barre chauffante (12).

4. Conduite de fluide selon la revendication 3, **caractérisée en ce que** le piquage (10) comporte deux zones en saillie (35, 36) destinées au soudage et à l'opposé l'une de l'autre et l'axe d'articulation (32) s'étend parallèlement à une liaison entre les zones en saillie (35, 36) destinées au soudage.

5. Conduite de fluide selon la revendication 4, **caractérisée en ce que** les zones en saillie (35, 36) destinées au soudage sont agencées de chaque côté de l'axe longitudinal (19).

6. Conduite de fluide selon l'une quelconque des revendications 1 à 5, **caractérisée en ce que** le bouchon (21) comporte des parties en saillie de centrage (28, 29) et l'axe d'articulation (32) s'étend entre les parties en saillie de centrage (28, 29).

7. Conduite de fluide selon la revendication 1, **caractérisée en ce que** les parties en saillie (34a à 34f) présentent au niveau de leur côté intérieur radial une plus petite dimension en direction circonférentielle qu'au niveau de leur côté extérieur radial.

8. Conduite de fluide selon la revendication 1 ou 7, **caractérisée en ce que**, dans au moins une partie (22, 23), il est prévu au moins deux parties en saillie (34a, 34c ; 34d, 34f) qui sont agencées avec un écart d'au moins 120° en direction circonférentielle.

9. Conduite de fluide selon l'une quelconque des revendications 1 à 8, **caractérisée en ce qu'**il est prévu entre les parties (22, 23) un espace libre (25) qui est agencé au moins partiellement dans le piquage (10).
